# EUROPÄISCHE PATENTSCHRIFT

(11) **EP 2 119 650 B1**
(45) Veröffentlichungstag und Bekanntmachung des Hinweises auf die Patenterteilung: **17.08.2011**
(21) Anmeldenummer: 09155309.9
(22) Anmeldetag: 17.03.2009
(51) Int. Cl.: B65G 57/00

(54) **Verfahren und Vorrichtung zur Palettierung von Stückgut**
Method and device for paletting cargo
Procédé et dispositif de palettisation de marchandises au détail

(30) Priorität: 22.04.2008 DE 102008020301
(43) Veröffentlichungstag der Anmeldung: 18.11.2009
(73) Patentinhaber: Krones AG, 93073 Neutraubling (DE)
(72) Erfinder: Perl, Kurt, 83253, Rimsting (DE); Zeiner, Peter, 83064, Raubling (DE)
(74) Vertreter: Benninger, Johannes

(56) Entgegenhaltungen:
- WO-A-00/71448
- WO-A-03/053826
- DE-A1- 3 627 577
- US-A- 4 941 374
- US-A- 5 437 533
- US-B1- 6 658 816

## Beschreibung

Die vorliegende Erfindung betrifft ein Verfahren zum Palettieren von Stückgutzusammenstellungen mit Zwischenlagen, insbesondere von Getränke-Großgebinden, mit den Merkmalen des Oberbegriffs des Anspruchs 1. Weiterhin bezieht sich die vorliegende Erfindung auf eine Vorrichtung zum Herstellen von Stückgutzusammenstellungen mit Zwischenlagen, insbesondere von Getränke-Großgebinden, mit den Merkmalen des Oberbegriffs des Anspruchs 8.

Aus dem Stand der Technik sind Palettierer zum Herstellen von Stückgutzusammenstellungen auf Paletten bekannt. Dabei wird eine zunächst leere Palette, häufig eine Holz-, Kunststoff- oder Euro- Palette in einer Ladestation bereitgestellt. Auf dieser Palette wird das Stückgut, insbesondere die Gebinde in Form von Flaschenkästen, Einweggebinden oder Ähnlichem angeordnet.

Bei der Anordnung von Gebinden von Flüssigkeitsbehältern, die mittels einer Schrumpffolie zusammengefasst sind, werden zwischen den Gebindelagen im Allgemeinen Zwischenlagen angeordnet, die der Stabilisierung der beladenen Paletten dienen. Als Zwischenlage wird hierbei häufig eine feste Karton- oder Papplage verwendet.

Bei der Palettierung werden die Gebinde von einer Gebindebereitstellungsstation auf die Palette gehoben. Anschließend wird über die Gebindelage eine Zwischenlage aus Papier oder Karton gelegt und darüber mit Hilfe der Gebindebereitstellungsstation eine zweite Gebindelage angeordnet.

US 4941374 beschreibt eine Vorrichtung zum Beladen von Paletten mit Kartons, die in Lagen angeordnet werden, wobei Zwischenlagen aus Papier verwendet werden. Die Zwischenschicht wird mittels eines drehbaren Trägerarms, der einen Saughalter aufweist, auf die Kartonschicht aufgelegt. Das Papier wird auf einer Rolle bereitgestellt und in der entsprechend benötigten Größe abgetrennt.

CA 2500638 zeigt einen Palettierer mit einer Bereitstellung von Zwischenlagen von einer Rolle, wobei die Zwischenlagen nacheinander abgegeben werden und bei dem Abgabevorgang mit einer nicht rutschenden Beschichtung versehen werden.

DE 20120699 U1 beschreibt die Palettierung von Stückgut mittels eines Palettierers bestehend aus drei Palettiereinheiten, wobei die Zwischenlagen in einem Vorrat (21) bereitgestellt und aus diesem entnommen werden.

DE 3627577 A1 beschreibt eine Palettenfüllstation, wobei zwischen den Produktlagen Zwischenlagen aus Papier zur Kippsicherung eingelegt werden. Das Stückgut wird mittels einer Hubvorrichtung und einer Produktlagenzuführung mit beweglichem Schiebeboden auf der Palette angeordnet. Unterhalb des Schiebebodens ist ein Papiermitnehmer angeordnet, der die Papierzwischenlagen aus einem Papiermagazin entnimmt.

Das Ziel der Erfindung besteht darin, ein Verfahren zur einfachen, schnellen Palettierung von Stückgut, insbesondere von Getränke-Gebinden, mit dazwischen angeordneten Zwischenlagen zu schaffen. Der Begriff Stückgut umfasst alle palettierfähigen Artikel, wie Päckchen, Kartons, Dosen oder dgl. und ist nicht auf Getränkeflaschen und daraus gebildete Gebinde beschränkt.

Ein weiteres Ziel der Erfindung besteht darin, eine Vorrichtung zu schaffen, bei der die bei der Palettierung verwendeten Zwischenlagen einfach zugeführt und entsprechend angepasst werden.

Diese Ziele der Erfindung werden mit den Gegenständen der unabhängigen Ansprüche 1 und 4 erreicht. Merkmale vorteilhafter Weiterbildungen der Erfindung ergeben sich aus den jeweiligen abhängigen Ansprüchen.

Bei dem beschriebenen Verfahren zur Palettierung von Stückgut, insbesondere von Gebinden von Flüssigkeitbehältern, werden die Gebinde zuerst in einer Gruppierungsvorrichtung gruppiert. Dabei wird die gewünschte Gebindelage in der Form hergestellt, wie sie anschließend auf die Palette überführt werden soll.

Die vorbereitete Gebindelage und eine Zwischenlage werden einer Transportvorrichtung zugeführt, die die Gebindelage und die Zwischenlage an einer Beladestation aufnimmt. Die Gebindebereitstellungsstation bzw. Transportvorrichtung arbeitet beispielsweise mit einer Drehsäule und einem oder zwei höhenverstellbaren Beladestationen. Diese können als Sauggreifer, Klemmgreifer o.ä. ausgebildet sein. Vorzugsweise handelt es sich bei der Beladestation um einen Jalousie- bzw. Rollenteppichkopf mit unterseitig angeordneten Saugnäpfen zur Handhabung der Zwischenlage.

Die gruppierte Gebindelage wird in den Rollenteppichkopf hineingeschoben, während die Zwischenlage über die Saugnäpfe an der Unterseite des Rollenteppichkopfs angesaugt wird.

Anschließend werden die Gebindelage und die Zwischenlage gemeinsam zu einer Abladestation transportiert. Die geschieht beispielsweise durch Drehen des beladenen Rollenteppich- bzw. Jalousiekopfes um eine Drehachse, so dass die Beladestation über der leeren oder bereits teilweise beladenen Palette positioniert wird. Durch Absetzen der Zwischenlage und Öffnen des Rollenteppichs, wodurch die Gebindelage abgesetzt wird, werden Zwischen- und Gebindelage auf der Palette angeordnet.

Erfindungsgemäß besteht die Zwischenlage aus einer biegeweichen, forminstabilen Folie, die auf wenigstens einer Rolle bereitgestellt wird. Die Vereinzelung der Zwischenlage von der Rolle erfolgt hierbei vor oder bei der Zuführung zur Beladestation der Transportvorrichtung.

Der Vorteil des gemeinsamen Transports von Zwischenlage und Gebindelage besteht darin, dass die Zwischenlage extrem dünn sein kann. D.h. der gemeinsame Transport ermöglicht die Verwendung einer dünnen Folie als Zwischenlage.

Gemäß einer bevorzugten Ausführungsform wird das beschriebene Verfahren zur Palettierung von Gebinden verwendet, die aus mehreren Flüssigkeitsbehältern bestehen, die mit einer Schrumpffolie zu den Gebinden zusammengefasst sind.

Die Vereinzelung der auf der Rolle bereitgestellten Zwischenlage erfolgt mittels einer Schneidvorrichtung. Dabei kann es sich um eine Schneidvorrichtung mit einem Messer, einem Laser oder einem anderen, dem Fachmann bekannten geeigneten Schneidmittel handeln.

Gemäß einer weiteren Ausführungsform können die Zwischenlagen auf der Rolle bereits durch Perforationen vorbestimmt sein. D.h. die Vereinzelung erfolgt durch Trennen der Perforation. Dies kann beispielsweise mittels eines Perforationsmessers geschehen.

Die Erfindung bezieht sich weiterhin auf eine Vorrichtung zur Palettierung von Gebindelagen von Flüssigkeitsbehältern nach dem oben beschriebenen Verfahren.

Die Vorrichtung weist eine Vereinzelungsvorrichtung für die Zwischenlagen auf. Dabei kann es sich um die oben genannte Schneidvorrichtung oder um eine Vorrichtung zum Trennen von Perforationen handeln.

Die Vorrichtung weist weiterhin eine Gruppierungsvorrichtung auf, mittels derer die Gebinde zu entsprechenden Gebindelagen zusammengefasst werden und über eine Zuführeinrichtung der Transportvorrichtung zugeführt werden. Die Transportvorrichtung weist gemäß einer bevorzugten Ausführungsform eine Drehsäule und mindestens eine Beladestation auf, wobei die Beladestation mit der Gebindelage und einer Zwischenlage beladen wird, die gleichzeitig zur Palette transportiert und auf dieser abgesetzt werden.

Die Vorrichtung enthält weiterhin mindestens eine Vorratsrolle mit Zwischenlagen, wobei die Zwischenlagen aus einer forminstabilen, biegeweichen Folie sind, die von der Vorratsrolle durch Schneiden oder Trennen an bestimmten Perforationsstellen vereinzelt werden müssen.

Gemäß einer bevorzugten Ausführungsform handelt es sich bei der Beladestation um einen Jalousie- bzw. Rollenteppichkopf mit unterseitig angeordneten Saugnäpfen zur Handhabung der Zwischenlage. Bei dieser Beladestation ist der Boden jalousieartig aufgebaut, d.h. insbesondere, dass der Boden aus vielen beweglichen Rollen besteht, die seitlich nach oben gefahren werden können, so dass die auf dem Rollenboden angeordneten Gebinde auf der Palette abgesetzt werden können.

Auf der Bodenunterseite sind weiterhin Fixierelemente für die Zwischenlage angeordnet. Dabei kann es sich beispielsweise um Saugnäpfe handeln, die die Zwischenlage mittels Vakuum festhalten. Jede weitere dem Fachmann bekannte Fixierung der Zwischenlage soll hiermit ebenfalls umfasst sein.

Die mindestens eine Beladestation ist vorzugsweise an einer Drehsäule angeordnet, so dass die Gruppierung der Gebinde, das Zuführen der Gebinde und der Zwischenlage zur Beladestation und das Beladen mit den Gebinden und der Zwischenlage auf einer Seite der Vorrichtung erfolgen kann. Das Zuführen der gegebenenfalls bereits teilweise beladenen Palette über eine geeignete Transportvorrichtung, beispielsweise ein Palettenförderband, kann dann auf einer anderen Seite, beispielsweise 90° oder 180° versetzt zur Gruppierung der Gebindelage erfolgen. An dieser Stelle erfolgt auch das Abladen der Zwischen- und der Gebindelage.

Vorzugsweise ist die Beladevorrichtung höhenverstellbar an einer Drehsäule angeordnet. Dadurch kann eine Anpassung an die gegebene Palettenhöhe erfolgen. Bei einer noch nicht beladenen Palette muss die Beladevorrichtung vor der Abgabe der Zwischen- und der Gebindelage niedriger eingestellt werden, damit diese nicht auf die Palette fallen, sondern in der richtigen Höhe abgesetzt werden. Ist die Palette bereits mit einer oder mehreren Gebindelagen beladen, muss die Beladestation natürlich höher angeordnet werden, um die Zwischen- und die Gebindelage ordentlich absetzen zu können.

Weitere Merkmale, Ziele und Vorteile der vorliegenden Erfindung gehen aus der nun folgenden detaillierten Beschreibung einer bevorzugten Ausführungsform der Erfindung hervor, die als nicht einschränkendes Beispiel dient und auf die beigefügten Zeichnungen Bezug nimmt. Gleiche Bauteile weisen dabei grundsätzlich gleiche Bezugszeichen auf und werden teilweise nicht mehrfach erläutert.
- Fig. 1 bis 4: zeigen verschiedene Ansichten einer Palettiervorrichtung mit einer Zuführeinrichtung von Zwischenlagen von zwei Rollen und
- Fig. 5: zeigt eine Palettiervorrichtung mit einer Zuführeinrichtung von Zwischenlagen von einer Rolle auf der Aufnahmeseite.

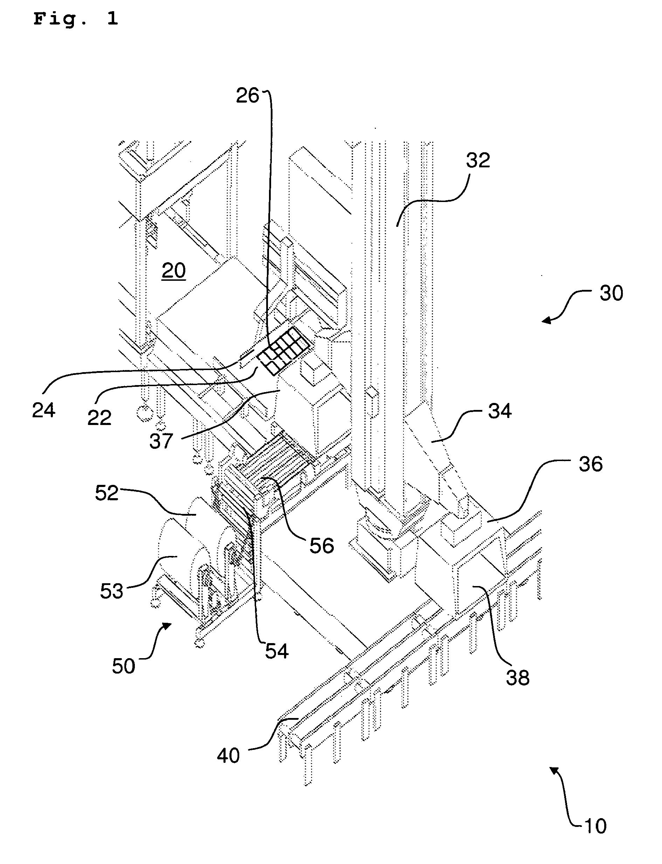

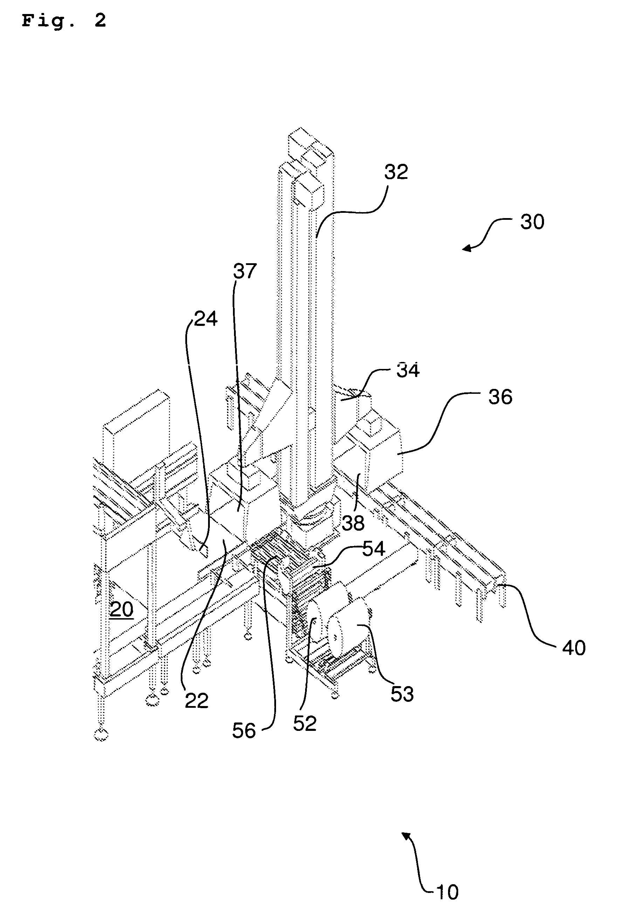

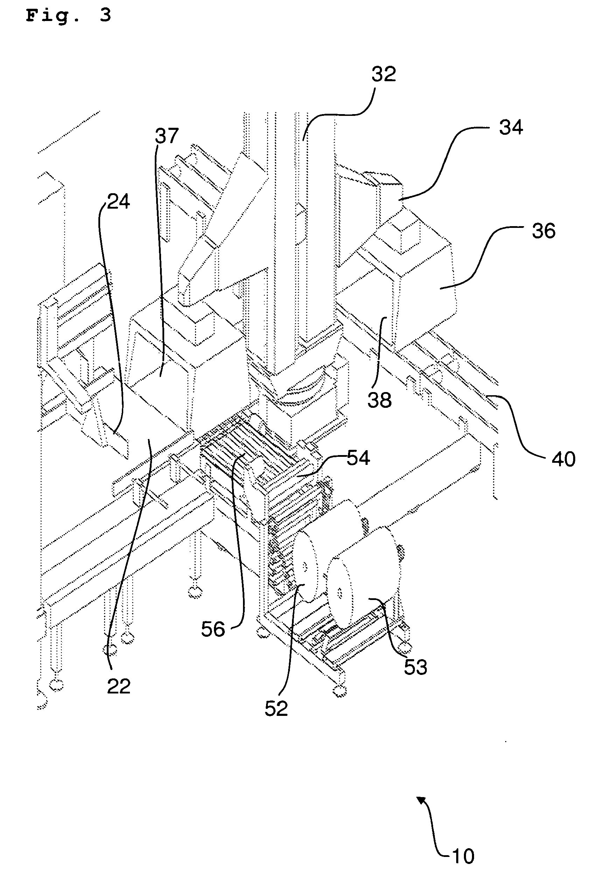

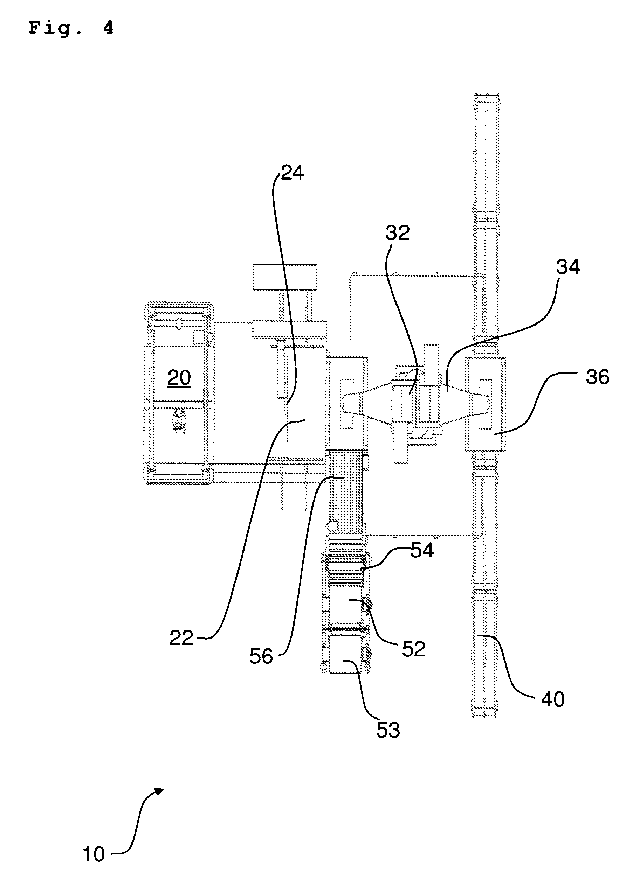

Eine mögliche Vorrichtung 10 zur Palettierung von Stückgut, insbesondere von Gebindelagen 26 wird anhand der Figuren 1 bis 5 illustriert.

Die Vorrichtung umfasst eine Gruppierungsvorrichtung bzw. Gruppierstation 20, in der das zu palettierende Stückgut in die gewünschten Reihen bzw. Lagen 26 gruppiert wird. Das gruppierte Stückgut, beispielsweise Flaschengebinde o.ä. wird dann über eine Zuführeinrichtung 22, beispielsweise mittels eines Schiebers 24, zur Transporteinrichtung 30 befördert. Die Transportvorrichtung 30 ist für den Transport des gruppierten Stückguts, d.h. von der Gebindelage 26, zur Palette und Ablage auf der Palette verantwortlich.

Gemäß der gezeigten Ausführungsform besteht die Transporteinrichtung 30 aus einem zentral drehbaren Gestell, insbesondere einer Drehsäule 32. An dieser Drehsäule 32 sind im Ausführungsbeispiel zwei Ausleger 34 mit jeweils einer Beladevorrichtung 36 angeordnet. Bei den Beladevorrichtungen 36 handelt es sich vorzugsweise um Vorrichtungen mit einem Rollenteppichkopf bzw. einem Jalousiekopf, wie sie dem Fachmann aus DE 2945883 und DE 3409964 bekannt sind.

Die Beladevorrichtungen 36 weisen wenigstens eine seitliche Öffnung 37 auf, durch die die Gebindelagen eingeschoben werden können. Die Beladevorrichtungen 36 weisen weiterhin Fixiereinrichtungen zum vorübergehenden Fixieren bzw. Festhalten einer Zwischenlage 60 auf. Bei der Fixiervorrichtung handelt es sich beispielsweise um einen steuerbaren Saugkopf, der beispielsweise mit Vakuum beaufschlagt werden kann und dadurch die Zwischenlage festhält. Weiterhin ist die Verwendung einer Klemmvorrichtung als Fixiervorrichtung denkbar. Weitere dem Fachmann bekannt Alternativen zur Fixierung einer Zwischenlage sollen von der vorliegenden Anmeldung ebenfalls umfasst werden.

Die Palettiervorrichtung 10 weist weiterhin eine Vorrichtung zum Bereitstellen von Zwischenlagen 50 auf. Diese besteht aus wenigstens einer Rolle 52, auf der die Zwischenlagen als kontinuierliche Bahn aufgewickelt sind. Im gezeigten Ausführungsbeispiel der Figuren 1 bis 4 sind zwei Zwischenlagen- Rollen 52, 53 bereitgestellt. Die zweite Rolle 53 dient hierbei als Vorrats- Rolle. Ist die erste Rolle 52 leer, werden die neuen Zwischenlagen direkt von der zweiten Rolle 53 entnommen.

Die Zwischenlagen werden mittels einer Schneidvorrichtung 54 in der entsprechenden Größe abgeschnitten. Die Schneidvorrichtung 54 kann dabei sowohl mit einem Schneidmesser, einer Laserschneidvorrichtung o.ä. Schneidvorrichtungen ausgestattet sein. Die Steuerung der Schneidvorrichtung erfolgt vorzugsweise mechanisch oder elektronisch. Gemäß einer alternativen Ausführungsform können die Größen der Zwischenlagen auf der Rolle 52, 53 bereits durch Perforation vorbestimmt sein, so dass die Zwischenlagen nur noch an der Perforation beispielsweise mittels eines Perforationsmessers abgetrennt werden. Die Zwischenlagen werden über eine Transportvorrichtung 56 unter die Beladevorrichtung 36 transportiert und über die oben beschriebene Fixiervorrichtung an der Unterseite der Beladevorrichtung 36 fixiert. Weiterhin wird die Beladevorrichtung 36 gleichzeitig, vor oder nach dem Fixieren der Zwischenlage über die Zuführeinrichtung 22, 24 mit dem Stückgut beladen, indem das gruppierte Stückgut über die Zuführvorrichtung 22, 24 der Beladevorrichtung 36 zugeführt und durch die seitliche Öffnung 37 in diese hinein geschoben wird.

Nachdem die Beladevorrichtung 36 das Stückgut und die Zwischenlage aufgenommen hat, wird diese durch Drehung der Drehsäule 32 zum Förderband 40 bewegt. Dementsprechend werden Zwischenlagen und Stückgut gemeinsam zur Palette transportiert, was zu einer erheblichen Kosten- und Zeiteinsparung führt. Über das Palettenförderband 40 wird die leere oder teilweise beladene Paletten bereitgestellt, auf der die neue Zwischenlage und die Stückgutlage aus der Beladestation 36 gemeinsam abgelegt werden.

Das Ablegen der Zwischenlage geschieht durch Ablösen der Zwischenlage von der der Beladevorrichtung 36 zugeordneten Fixiervorrichtung. Handelt es sich bei der Fixiervorrichtung beispielsweise um einen mit Vakuum beaufschlagbaren Saugkopf, so wird die Zwischenlage durch Ablassen des Vakuums auf der gegebenenfalls schon teilweise beladenen Palette abgelegt.

Das Ablegen des Stückguts erfolgt abhängig von der Art der verwendeten Beladevorrichtung 36. Handelt es sich dabei um einen Rollenteppichkopf entsprechend DE 9202553 U1, so wird die als Rollenteppich ausgebildete untere Abstützebene 38 eingefahren, so dass die Unterseite der Beladevorrichtung 36 geöffnet ist und die Stückgutlage auf der Palette über der ebenfalls abgelegten Zwischenlage abgesetzt wird.

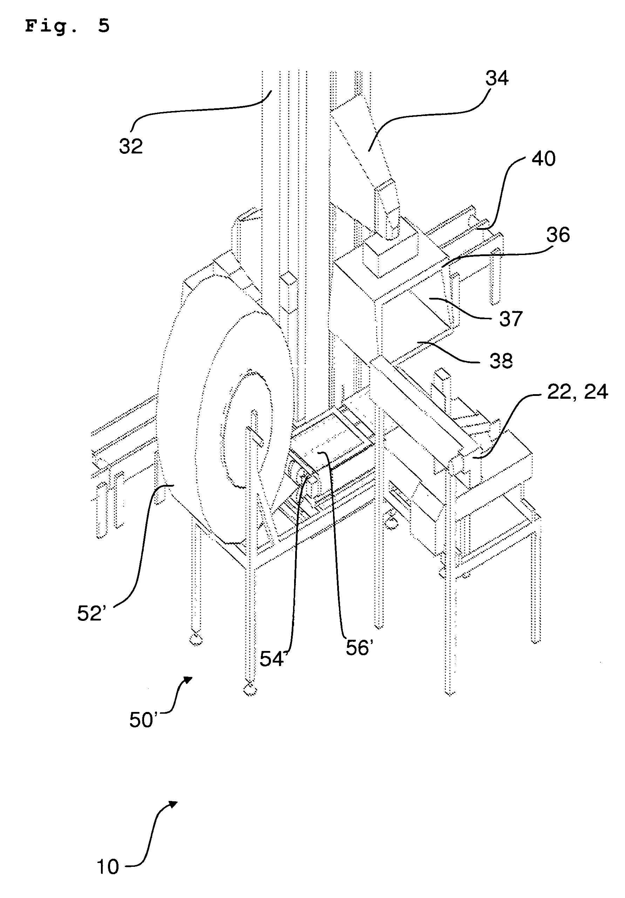

Fig. 5 zeigt eine alternative Ausführungsform, bei der nur eine Zwischenlagen- Rolle 52' verwendet wird und bei der die gesamte Vorrichtung zum Bereitstellen von Zwischenlagen 50' auf der gegenüberliegenden Seite in Bezug auf die Stückgutzuführeinrichtung 22, 24 angeordnet ist. Die Vorrichtung zum Bereitstellen von Zwischenlagen 50' weist ebenfalls eine Vereinzelungsvorrichtung bzw. Schneidvorrichtung 54' und eine Transportvorrichtung 56' auf. Die vereinzelten Zwischenlagen werden über die Transportvorrichtung 56' zur bzw. unter die Beladevorrichtung 36 transportiert und von dieser über die oben beschriebenen Fixiereinrichtungen aufgenommen.

Die Aufnahme des Stückguts sowie der Transport und das Ablegen der Zwischenlage und der Stückgutlage auf der gegebenenfalls schon teilweise beladenen Palette erfolgt entsprechend der Beschreibung zu den Figuren 1 bis 4.

Die Erfindung ist nicht auf die vorstehenden Ausführungsbeispiele beschränkt. Vielmehr ist eine Vielzahl von Varianten und Abwandlungen denkbar, die von dem erfindungsgemäßen Gedanken Gebrauch machen und deshalb ebenfalls in den Schutzbereich fallen.

## Patentansprüche

1. Verfahren zur Palettierung von Stückgut wie Gebinden aus vorzugsweise Flüssigkeitsbehältern, umfassend die folgenden Schritte:
- Gruppierung der Gebinde in einer Gruppierungsvorrichtung (20) zu einer Gebindelage (26),
- Zuführen der Gebindelage (26) und jeweils einer Zwischenlage zu einer Transporteinrichtung (30),
- Aufnahme einer Gebindelage und einer Zwischenlage durch eine Beladestation (36) der Transporteinrichtung (30),
- Gemeinsamer Transport der Gebindelage und einer Zwischenlage zur Abladestation,
- Absetzen der Gebindelage und einer Zwischenlage von der Beladestation (36) der Transporteinrichtung (30) auf der gegebenenfalls bereits teilweise bestückten Palette,
**dadurch gekennzeichnet, dass**
- die Zwischenlage aus einer biegeweichen Folie besteht,
- die Zwischenlage von wenigstens einer Rolle (52, 52', 53) bereitgestellt wird und
- vor oder bei der Zuführung zur Beladestation (36) der Transportvorrichtung (30) vereinzelt wird.

2. Verfahren gemäß Anspruch 1, **dadurch gekennzeichnet, dass** die Gebinde vorzugsweise aus mehreren Flüssigkeitsbehältern bestehen, die mit einer Schrumpffolie zu den Gebinden zusammengefasst sind.

3. Verfahren gemäß Anspruch 1 oder 2, **dadurch gekennzeichnet, dass** die Zwischenlage mittels einer Schneidvorrichtung (54, 54') vereinzelt wird.

4. Vorrichtung zur Palettierung von Stückgut wie Gebindelagen aus vorzugsweise Flüssigkeitsbehältern, wobei zwischen den Gebindelagen jeweils eine Zwischenlage vorgesehen ist, mit einer Vereinzelungsvorrichtung (54, 54') für die Zwischenlagen, mit einer Gruppierungsvorrichtung (20) für die Gebinde zu Gebindelagen, mit einer Zuführeinrichtung (22, 24) für die Gebindelagen, mit einer Zuführeinrichtung für die Zwischenlagen und mit wenigstens einer Transporteinrichtung (30) zum gemeinsamen Transport einer Gebindelage und jeweils einer Zwischenlage, **dadurch gekennzeichnet, dass** mindestens eine Rolle (52, 52', 53) vorgesehen ist, die eine als die Zwischenlage fungierende forminstabile Folie enthält.

5. Vorrichtung gemäß Anspruch 4, **dadurch gekennzeichnet, dass** die Gebinde vorzugsweise aus mehreren Flüssigkeitsbehältern bestehen, die mit einer Schrumpffolie zu den Gebinden zusammengefasst sind.

6. Vorrichtung (10) gemäß einem der Ansprüche 4 und 5, **dadurch gekennzeichnet, dass** die Transportvorrichtung (30) eine Beladestation (36) umfasst, wobei der Boden der Beladestation (36) jalousieartig aufgebaut ist.

7. Vorrichtung (10) gemäß Anspruch 6, **dadurch gekennzeichnet, dass** der Boden der Beladestation (36) Fixierelemente für die Zwischenlage aufweist.

8. Vorrichtung (10) gemäß einem der Ansprüche 4 bis 7, **dadurch gekennzeichnet, dass** die wenigstens eine Transportvorrichtung (30) eine Drehsäule (32) aufweist.

9. Vorrichtung (10) gemäß einem der Ansprüche 4 bis 8, **dadurch gekennzeichnet, dass** die wenigstens eine Beladevorrichtung (36) an der Drehsäule (32) höhenverstellbar angeordnet ist.

10. Vorrichtung (10) gemäß einem der Ansprüche 4 bis 9, **dadurch gekennzeichnet, dass** die Vorrichtung (10) ein Palettenförderband (40) aufweist.

## Claims

1. Method for palletizing confectioned units especially packs of liquid containers comprising the following steps:
• grouping confectioned packs into a layer (26) by a grouping device (20),
• feeding the layer (26) of confectioned packs and an intermediate layer each to a transport device (30),
• uptake of one layer (26) of confectioned packs and one intermediate layer by a loading station (36) of the transport device (30),
• joint transport of the layer (26) of confectioned packs and the intermediate layer to an unloading station,
• deposition of the layer (26) of confectioned packs and the intermediate layer from the loading station (36) of the transport device (30) onto a pallet, whereby the pallet can be already partially loaded,
**characterized in that**
• the intermediate layer is a flexible film,
• the intermediate layer is provided from at least one roll (52, 52', 53) and
• the intermediate layer is separated from the roll before or during feeding the intermediate layer to the loading station (36) of the transport device (30).

2. Method according to claim 1, whereby the packs comprise several liquid containers that are wrapped with shrinking film and thereby united into packs.

3. Method according to claim 1 or 2, whereby the isolated intermediate layers are separated by a cutting device (54, 54').

4. Apparatus (10) for palletizing confectioned units especially packs of liquid containers, whereby an intermediate layers are arranged between the layers of confectioned packs, whereby the device comprises a separation device (54, 54') for the intermediate layers, a grouping device (20) for grouping the packs into layers of confectioned packs, with a feeding device (22, 24) for the layers of confectioned packs, with a feeding device for the intermediate layers und with at least one transport device (30) for the joint transport of one layer of confectioned packs and one intermediate layer each, **characterized in that** the apparatus (10) comprises at least one roll (52, 52', 53) that contains a form unstable film as intermediate layer.

5. Apparatus (10) according to claim 4, whereby the packs comprise several liquid containers that are wrapped with shrinking film and thereby united into packs.

6. Apparatus (10) according to claim 4 or 5, whereby the transport device (30) comprises a loading station (36) and whereby the base of the loading station (36) is built like a blind.

7. Apparatus (10) according to claim 6, whereby the base of the loading station (36) comprises fixing elements for the fixation of the intermediate layer.

8. Apparatus (10) according to one of the claims 4 to 7, whereby the at least one transport device (30) comprises a rotatable column (32).

9. Apparatus (10) according to one of the claims 4 to 8, whereby the height of the at least one loading device (36) on the rotatable column (32) is adjustable.

10. Apparatus (10) according to one of the claims 4 to 9, whereby device (10) comprises a conveyor (40) for the transport of the pallets.

## Revendications

1. Procédé de palettisation de marchandises de détail comme des packs constitués de préférence de réservoirs de liquide, comprenant les étapes suivantes :
• regroupement des packs dans un dispositif de regroupement (20) en une couche de packs (26),
• transfert de la couche de packs (26) et, chaque fois, une couche intermédiaire dans un équipement de transport (30),
• prise en charge d'une couche de packs et d'une couche intermédiaire par une station de chargement (36) de l'équipement de transport (30),
• transport commun de la couche de packs et d'une couche intermédiaire vers la station de déchargement,
• déchargement de la couche de packs et d'une couche intermédiaire de la station de chargement (36) de l'équipement de transport (30) sur la palette éventuellement déjà partiellement garnie,
**caractérisé en ce que**
• la couche intermédiaire se compose d'une feuille souple et flexible,
• la couche intermédiaire est fournie par au moins un rouleau (52, 52', 53) et
• avant ou pendant le transfert à la station de chargement (36), le dispositif de transport (30) est échantillonné.

2. Procédé selon la revendication 1, **caractérisé en ce que** les packs se composent de préférence de plusieurs réservoirs de liquide qui sont regroupés en packs avec une feuille rétractable.

3. Procédé selon la revendication 1 ou 2, **caractérisé en ce que** la couche intermédiaire est échantillonnée au moyen d'un dispositif de coupe (54, 54').

4. Dispositif de palettisation de marchandises de détail comme des couches de packs se composant de préférence de réservoirs de liquides, étant donné qu'est prévue chaque fois entre les couches de packs une couche intermédiaire, avec un dispositif d'échantillonnage (54, 54') pour les couches intermédiaires, avec un équipement d'alimentation (22, 24) pour les couches de packs, avec un équipement d'alimentation pour les couches intermédiaires et avec au moins un équipement de transport (30) pour le transport commun d'une couche de packs et chaque fois une couche intermédiaire, **caractérisé en ce qu'**est prévu au moins un rouleau (52, 52', 53) qui contient une feuille de forme instable tenant lieu de couche intermédiaire.

5. Dispositif selon la revendication 4, **caractérisé en ce que** les packs se composent de préférence de plusieurs réservoirs de liquide qui sont regroupés en packs avec une feuille rétractable.

6. Dispositif (10) selon l'une quelconque des revendications 4 et 5, **caractérisé en ce que** le dispositif de transport (30) comprend une station de chargement (36), étant donné que le fond de la station de chargement (36) est construit en forme de jalousie.

7. Dispositif (10) selon la revendication 6, **caractérisé en ce que** le fond de la station de chargement (36) présente des éléments de fixation pour la couche intermédiaire.

8. Dispositif (10) selon l'une quelconque des revendications 4 à 7, **caractérisé en ce que** le au moins un dispositif de transport (30) présente un tourillon (32).

9. Dispositif (10) selon l'une quelconque des revendications 4 à 8, **caractérisé en ce que** le au moins un dispositif de chargement (36) est disposé, à hauteur réglable, au niveau du tourillon (32).

10. Dispositif (10) selon l'une quelconque des revendications 4 à 9, **caractérisé en ce que** le dispositif (10) présente un convoyeur de palettes (40).
